# EUROPEAN PATENT SPECIFICATION

(11) **EP 0 963 824 B1**
(45) Date of publication and mention of the grant of the patent: **08.12.2004**
(21) Application number: 99304482.5
(22) Date of filing: 09.06.1999
(51) Int. Cl.: B29B 13/08, B29C 43/00, A61F 2/02

(54) **Method for forming cross-linked molded plastic bearings**
Verfahren zur Herstellung vernetzter, geformter Kunststofflager
Procédé de preparation des paliers moulés en plastique réticulée

(30) Priority: 10.06.1998 US 88729 P
(43) Date of publication of application: 15.12.1999
(60) Divisional application: 04075031.7
(73) Proprietor: DePuy Products, Inc., Warsaw, IN 46581 (US)
(72) Inventor: McNulty, Donald E., Warsaw, Indiana 46580 (US); Smith, Todd, Fort Wayne, Indiana 46804 (US)
(74) Representative: Fisher, Adrian John

(56) References cited:
- EP-A- 0 351 866
- EP-A- 0 729 981
- WO-A-94/27651
- WO-A-97/29793
- WO-A-98/01085
- WO-A-98/14223

## Description

### Background of the Invention

The present invention relates to improved bearings for use in orthopaedic implant prosthesis and particularly to methods for making cross-linked molded ultra high molecular weight polyethylene (UHMWPE) bearings and bearing material.

Such UHMWPE resin is commonly used for bearings in hip, knee, shoulder and elbow prosthesis. Typically, the bearings may be formed by direct compression molding processes or by machining the required bearing shapes from mill shapes such as sheet or bar stock material. Typically, the stock material or the molded bearings are irradiated and subsequently heat treated or heat annealed. The irradiation generates molecular cross-links and free radicals. The free radicals are subsequently eliminated by the heat treating processes.

Reference is made to a number of prior art references as follows: **U.S. Patents:**
1. U.S. Patent No. 5,414, 049, Non-Oxidizing Polymeric Medical Implant, to Deh-Chuan Sun, et al..
2. U. S. Patent No. 5,449, 745, Non-Oxidizing Polymeric Medical Implant, to Deh-Chuan Sun, et al..
3. U.S. Patent No. 5,543,471, Non-Oxidizing Polymeric Medical Implant, to Deh-Chuan Sun, et al..
4. U.S. Patent No. 5,650,485, Non-Oxidizing Polymeric Medical Implant, to Deh-Chuan Sun, et al..
5. U.S. Patent No. 5,728,748, Non-Oxidizing Polymeric Medical Implant, to Deh-Chuan Sun, et al..
6. U.S. Patent No. 4,586,995, Polymer and Irradiation Treatment Method, to James C. Randall.
7. U. S. Patent No. 5,153,039, High Density Polyethylene Article with Oxygen Barrier Properties, to Jay P. Porter, et al..
8. U.S. Patent No. 5,508,319, High Melt Strength, Ethylene Polymer, Process for Making It, and Use Thereof, to Anthony J. DeNicola, Jr. et al..
9. U.S. Patent No. 3,352,818, Stability of Polyolefines, to Gerhard Meyer, et al.
10. U.S. Patent No. 5,577,368, Method for Improving Wear Resistance of Polymeric Bioimplantable Components, to John V. Hamilton, et al.,
11. U.S. Patent No. 5,753,182, Method for Reducing the Number of Free Radicals Present in Ultrahigh Molecular Weight Polyethylene Orthopedic Components, to Joel Higgins.
12. U.S. Patent No. 5,709,020, Method for Reducing the Generation of Wear Particulates From an Implant, to David A. Pienowski, et al..
13. U.S. Patent No. 5,702,456, Implant Having Reduced Generation of Wear Particulates, to David A. Pienowski.
14. U.S. Patent No. 5,515,590, Method for Reducing the Generation of Wear Particulates From an Implant, David A. Pienowski.
15. U.S. Patent No. 5,593,719, Treatments to Reduce Frictional Wear Between Components Made of Ultra-High Molecular Weight Polyethylene and Metal Alloys. Geoffrey Dearnaley, et al.
16. U.S. Patent No. 4,366,618, Bone Connective Prosthesis Adapted to Maximize Strength and Durability of Prostheses - Bone Cement Interface; and Methods of Forming Same, to Simon Raab.
17. U.S. Patent No. 5,014,494, Method of Sterilizing Medical Articles, to Robert D. George.
18. U.S. Patent No. 5,137,688, Irradiated Articles Molded From Polycarbonate - Polyamide Blends, to James L. DeRudder.
19. U. S. Application No. 08/911,792, Process for Medical Implant of Cross-linked Ultrahigh Molecular Weight Polyethylene Having Improved Balance of Wear Properties and Oxidation, filed August 15, 1997, to Kenneth Ashley Saum, et al.

### Foreign Patents

20. E.P. Patent No. 0722973 Al, Chemically Crosslinked Ultrahigh Molecular Weight Polyethylene for Artificial Human Joints, to Ron Salovey, et al..
21. W.O. Patent No. 97/29793, Radiation and Melt Treated Ultra High Molecular Weight Polyethylene Prosthetic Devices, to W. Merrill, et al..
22. W.O. Patent No. 98/01085, Crosslinking of Polyethylene for Low Wear Using Radiation and Thermal Treatments, to Fu-Wen Shen, et al..
   The above references teach the general concepts involved in forming UHMWPE resin directly into a part or a stock form from which the part is made, gamma or other irradiation of the part or the stock form and subsequent heat treating (annealing or remelting) of the part or stock form.
23. W.O Patent No. 94/27651, Non-Oxidizing Polymeric Medical Implant, to Howmedica, Inc. This reference teaches a plastic prosthesis bearing which is moulded from a plastic resin, the moulded prosthesis then being irradiated, and subsequently annealed.

### Summary of the Invention

According to the invention, there is provided a method as set forth in claim 1 of the accompanying claims. Further aspects are set out in the accompanying dependent claims. Thus, the present invention is directed to a method for irradiating the plastic resin when it is in powder form, which produces cross linking of the molecular chains as well as free radicals. The free radicals generated from the gamma irradiation are quenched by the subsequent molding process.

While the prior art teaches irradiating formed bearing parts or stock from which bearings are made, the present invention involves irradiation ofthe plastic (preferably) UHMWPE resin powder, preferably by gamma or electron beam irradiation. This ionizing irradiation will generate molecular cross-links and free radicals as is well documented. These free radicals will be dealt with in the present invention by the molding process which involves temperatures at or above the melting point of the polymer.

The present invention is designed to reduce the amount of wear debris generated from UHMWPE bearings. Such wear debris has been associated with bone and soft tissue deterioration leading to implant loosening, which may necessitate even revision surgery. Another aim of the present invention is to improve the wear resistance of UHMWPE bearings.

Additional features of the present invention will become apparent to those skilled in the art upon consideration of the following detailed description of preferred embodiments exemplifying the best mode of carrying out the invention as presently perceived.

### Description of the Preferred Embodiment(s)

The present invention involves producing a cross-linked bearing component by cross-linking the UHMWPE resin powder and then using the thermal energy of the molding process to promote further cross-linking by free-radical quenching. The process of the present invention may be used to mold net-shape bearings directly to provide a finish which is satisfactory for an articular (bearing) surface. (The term "net-shape" is intended to define a shape that is the final shape of the bearing to be used in the implant. "Near net-shape" requires some degree of machining to produce the final bearing.) It is believed that smoother bearing surfaces can be made by molding processes than by machining processes.

The irradiation process may preferably be performed under vacuum, in an inert atmosphere to eliminate oxygen, or in an oxygen reduced atmosphere. Oxygen present when irradiating has been shown to cause subsequent reduction in mechanical properties for UHMWPE. A premolding vacuum phase is also contemplated by the present invention to enhance removal or reduction of any unwanted oxygen from the UHMWPE resin powder. For example, the irradiated powder resin may be cold pressed into the desired shape and then left under vacuum before heat is applied.

The molding process, which may also preferably be performed under vacuum, may involve pressures from 7x10⁶ to 483x10⁶ N/M² (1,000 to 70,000 psi) and set point temperatures of 121° to 260°C (250° to 500° Fahrenheit). The resulting work piece is either the actual desired bearing configuration or blank that can be machined subsequently to produce the desired bearing geometry.

It will be appreciated, however, that acceptable results may be achieved when either or both the irradiation process and the molding process are carried out under atmospheric conditions, i.e., with some oxygen present. This may well be the case for certain bearing configurations.

One embodiment of the present invention relates to a method for producing a medical implant or stock from which an implant can be made from olefinic material such as UHMWPE comprising the steps of placing olefinic resin in a sealed container, preferably evacuating or displacing air from the container to produce a low oxygen or oxygen free atmosphere, subjecting the resin container to irradiation, preferably gamma or electron beam irradiation, at a dose level between 2 and 50 Mrads to create cross-links and free radicals within the polymer resin, preferably maintaining an inert atmosphere, and subjecting the free radical containing powder to a molding operation which preferably takes place in a vacuum or in the inert atmosphere. The irradiated resin may preferably be transferred from the sealed container to the molding equipment in a vacuum or in an inert atmosphere environment or may be exposed to air for a short time during the transfer.

The molding operation may comprise the steps of raising the powder resin within the mold to a temperature at or above the melting point of the resin. The purpose of this is to produce a consolidated net-shape or near net-shape implant or raw material (bar, sheet or puck stock) while simultaneously quenching the free radicals to promote further cross-linking between molecules of the polymer.

The sealed container may be flushed with inert gas (nitrogen, argon, helium, neon, or any combination thereof) and evacuated several times to further reduce the residual oxygen content. Instead of a vacuum, the atmosphere of the sealed container prior to gamma irradiation and storage may also be an inert gas consisting of nitrogen, argon, helium, neon, or any combination thereof.

A more complete understanding of the present invention can be obtained by referring to the following illustrative examples of the practice of the invention, which examples are not intended, however, to be unduly limitative of the invention.

### EXAMPLE 1

A polymer resin is acquired in powder form, which is often referred to as "flake" in the industry. This resin powder is placed in pouches which are formed from a breathable plastic membrane. It is common to use such Tyvek™ pouches to package medical products for sterilization. A plurality of such pouches are placed in a vacuum container, i.e., a container which can be closed and in which a vacuum can be formed. This container may be pumped for a period of time sufficient to remove the oxygen, at least to the extent discussed in the prior art references. In some cases, it may be advisable to pull what is referred to as a "high vacuum" condition within the sealed container to make sure the resin powder is oxygen free. It will be appreciated that the process of pumping the vacuum in the container may be a process in which, after a vacuum is initially pulled on the container, the container may be filled with an inert gas, and then the inert gas may be pumped from the container. This flushing process may take place two or more times to acquire the desired oxygen free condition.

The container is sealed and left under a vacuum and irradiated using standard irradiation techniques through the walls of the metal container. While the irradiation may be from 2 to 50 Mrads or even 2 to 100 Mrads, it is generally believed that irradiation from 2 to 20 Mrads is sufficient. The container is removed from the irradiation station and a two day post-irradiation pump down was conducted to remove residual hydrogen. The container was then brought to the molding area which may comprise one or more molding presses. It may be advisable to transfer the pouches from the container to the molding presses using a system which will keep the pouches and the powder therein from being exposed to oxygen. It is believed to be preferable to do the actual molding in mold equipment which is capable of being under a vacuum. Alternatively, a short time exposure of the irradiated resin to air may be inconsequential. Essentially, the resin powder is transferred from the pouches into the molding equipment and molded under a vacuum or inert gas (oxygen free environment). The molding operation is rather conventional in that it applies temperatures greater than the melting point of the resin and pressures to form the desired molded material which may be a net-shape bearing, a near net-shape bearing or stock from which a bearing may be fabricated.

The method of the present invention, therefore, contemplates irradiation of resin powder and molding (remelting) of the resin powder under sufficient heat and pressure to form the powder into a desired solid plastic shape. The irradiation and the molding may take place in atmosphere or in a vacuum or in an inert atmosphere. In this specification and in the claims, a vacuum, partial vacuum or inert atmosphere may collectively be referred to as an "oxygen reduced atmosphere." The molding may take place in conventional molding equipment in atmosphere or in oxygen reduced atmosphere. The plastic may be an olefinic resin such as UHMWPE or any plastic which is cross-linked by irradiation and the free radicals of which are eliminated by heat treating such as by remelting for molding.

### EXAMPLE 2

A UHMWPE polymer resin (GUR 1050 from Ticona) was acquired in powder form. This resin powder was placed in a pouch and positioned in a vacuum container, which was closed. The container was placed under a vacuum for a period of time sufficient to substantially remove the oxygen from the resin powder. The container was left under a vacuum and irradiated at about 5 to about 10 Mrads using standard irradiation techniques.

The polymer resin was then removed from the container and subjected to a two day post-irradiation pump down to remove residual hydrogen from the polymer resin. The polymer resin was then transferred to compression molding equipment. The polymer resin was again placed under a vacuum to substantially remove the oxygen from the resin powder and molded in an oxygen free environment. About 10x10⁶ N/M² (1500 pounds per square inch) of pressure was applied to the resin power at a temperature of about 204°C (400°F) for 60 minutes. The polymer resin was allowed to cool to room temperature and removed from the molding equipment.

It is thought that the method for forming a plastic prosthesis bearing, net-shape bearing, near net-shape bearing or plastic stock from which such a bearing can be formed by the present invention and many of its attendant advantages will be understood from the foregoing description and it will be apparent that various changes :may be made without departing from the scope of the invention or sacrificing all of its material advantages, the form hereinbefore described being merely a preferred or exemplary embodiment thereof

## Claims

1. A method for forming a plastic prosthesis bearing, net-shape bearing, near net-shape bearing or plastic stock from which such a bearing can be formed, the method comprising the steps of
providing plastic resin in powdered form,
subjecting the powdered resin to irradiation to cross-link the resin, and
molding the irradiated powder by applying heat and pressure to form the powder into a desired solid plastic shape, the heating being sufficient to melt the powder.

2. The method of claim 1 in which the irradiation step is accomplished in an oxygen reduced atmosphere.

3. The method of claim 1 or claim 2 in which the molding step is accomplished in oxygen reduced atmosphere.

4. The method of claim 1, 2 or 3 in which the molding step involves pressure from 7x10⁶ to 483x10⁶ N/M² (1,000 to 70,000 psi)

5. The method of any preceding claim in which the molding step is at a temperature of 121°C to 260°C (250° F to 500° F)

6. The method of any preceding claim in which the irradiation step is at a level of 2 to 100 Mrads gamma radiation.

7. The method of any one of claims 1 to 5 in which the irradiation step is at a level of 2 to 5 Mrads of gamma radiation.

8. The method of any one of claims 1 to 5 in which the irradiation step is at a level of 2 to 20 Mrads of gamma radiation.

9. The method of any preceding claim in which the irradiation step comprises the steps of placing resin powder in pouches formed from a breathable plastic membrane, placing the pouches in a container, and providing an oxygen reduced atmosphere in the container during the irradiation.

10. The method of claim 9 in which the molding step involves transferring the pouches containing the irradiated resin to the molding press where the heat and pressure are applied.

11. The method of claim 10 in which the molding step involves a temperature greater than the melting point of the resin.

12. The method of any preceding Claim in which the plastic is an olefinic plastic resin.

13. The method of any preceding Claim in which the plastic is UHMWPE.

14. The method of any preceding claim in which the molding step involves applying heat at a temperature at or above the melting point of the resin for a time sufficient to form the powder into a desired solid plastic shape and quench the free radicals.

## Patentansprüche

1. Verfahren zur Herstellung eines Kunststoffprotheselagers, eines Nettoformlagers, eines Lagers mit nahezu Nettoform oder eines Kunststoffstiels, aus dem ein solches Lager hergestellt werden kann, wobei das Verfahren die Schritte umfaßt:
Bereitstellen eines Kunststoffharzes in pulverisierter Form,
Unterziehen des pulverisierten Harzes einer Bestrahlung, um das Harz zu vernetzen, und
Formen des bestrahlten Pulvers durch Beaufschlagen von Wärme und Druck, um das Pulver in eine gewünschte feste Kunststoffform zu bilden, wobei das Erwärmen ausreichend ist, um das Pulver zu schmelzen.

2. Verfahren nach Anspruch 1, bei welchem der Bestrahlungsschritt in einer an Sauerstoff verminderten Atmosphäre durchgeführt wird.

3. Verfahren nach Anspruch 1 oder nach Anspruch 2, bei welchem der Formungsschritt in einer an Sauerstoff verminderten Atmosphäre durchgeführt wird.

4. Verfahren nach Anspruch 1, 2 oder 3, bei welchem der Formungsschritt einen Druck von 7 x 10⁶ bis 483 x 10⁶ N/M² (1.000 bis 70.000 psi) einschließt.

5. Verfahren nach einem der vorangehenden Ansprüche, bei welchem der Formungsschritt bei einer Temperatur von 121°C bis 260°C (250°F bis 500°F) ist.

6. Verfahren nach einem der vorangehenden Ansprüche, bei welchem der Bestrahlungsschritt bei einem Gehalt von 2 bis 100 Mrad Gammastrahlung ist.

7. Verfahren nach einem der Ansprüche 1 bis 5, bei welchem der Bestrahlungsschritt bei einem Gehalt von 2 bis 5 Mrad Gammastralung ist.

8. Verfahren nach einem der Ansprüche 1 bis 5, bei welchem der Bestrahlungsschritt bei einem Gehalt von 2 bis 20 Mrad Gammastrahlung ist.

9. Verfahren nach einem der vorangehenden Ansprüche, bei welchem der Bestrahlungsschritt die Schritte eines Anordnens von Harzpulver in Beuteln, die aus einer atmungsaktiven Kunststoffmembran gebildet sind, eines Anordnens der Beutel in einem Behälter und eines Bereitstellens einer an Sauerstoff verminderten Atmosphäre in dem Behälter während der Bestrahlung umfaßt.

10. Verfahren nach Anspruch 9, bei welchem der Formungsschritt ein Überführen der das bestrahlte Harz enthaltenden Beutel zu der Formungspresse einschließt, wo die Wärme und der Druck beaufschlagt werden.

11. Verfahren nach Anspruch 10, bei welchem der Formungsschritt eine Temperatur von größer als dem Schmelzpunkt des Harzes einschließt.

12. Verfahren nach einem der vorangehenden Ansprüche, bei welchem der Kunststoff ein olefinisches Kunststoffharz ist.

13. Verfahren nach einem der vorangehenden Ansprüche, bei welchem der Kunststoff UHMWPE ist.

14. Verfahren nach einem der vorangehenden Ansprüche, bei welchem der Formungsschritt ein Beaufschlagen von Wärme bei einer Temperatur bei oder oberhalb des Schmelzpunkts des Harzes für eine Zeitdauer einschließt, die ausreichend ist, um das Pulver in eine gewünschte feste Kunststoffform zu bilden und die freien Radikale zu quenchen.

## Revendications

1. Procédé pour former un palier de prothèse en plastique, un palier à cotes finies, un palier à cotes semi-finies ou un matériau en plastique à partir duquel un tel palier peut être formé, le procédé comprenant les étapes consistant à
fournir une résine en plastique sous forme de poudre,
soumettre la résine en poudre à une irradiation pour réticuler la résine, et
mouler la poudre irradiée en appliquant de la chaleur et de la pression pour former la poudre en une forme en plastique solide souhaitée, le chauffage étant suffisant pour faire fondre la poudre.

2. Procédé selon la revendication 1, dans lequel l'étape d'irradiation est accomplie dans une atmosphère réduite en oxygène.

3. Procédé selon la revendication 1 ou la revendication 2, dans lequel l'étape de moulage est accomplie dans une atmosphère réduite en oxygène.

4. Procédé selon la revendication 1, 2 ou 3, dans lequel l'étape de moulage implique une pression de 7 x 10⁶ à 483 x 10⁶ N/M² (1 000 à 70 000 psi).

5. Procédé selon l'une quelconque des revendications précédentes, dans lequel l'étape de moulage se déroule à une température de 121 °C à 260 °C (250 °F à 500 °F).

6. Procédé selon l'une quelconque des revendications précédentes, dans lequel l'étape d'irradiation se déroule à un niveau de 2 à 100 Mrads de rayonnement gamma.

7. Procédé selon l'une quelconque des revendications 1 à 5, dans lequel l'étape d'irradiation se déroule à un niveau de 2 à 5 Mrads de rayonnement gamma.

8. Procédé selon l'une quelconque des revendications 1 à 5, dans lequel l'étape d'irradiation se déroule à un niveau de 2 à 20 Mrads de rayonnement gamma.

9. Procédé selon l'une quelconque des revendications précédentes, dans lequel l'étape d'irradiation comprend les étapes consistant à placer la poudre de résine dans des poches formées d'une membrane en plastique perméable à l'air, à placer les poches dans un conteneur, et à fournir une atmosphère réduite en oxygène dans le conteneur au cours de l'irradiation.

10. Procédé selon la revendication 9, dans lequel l'étape de moulage implique le transfert des poches contenant la résine irradiée à la presse de moulage où la chaleur et la pression sont appliquées.

11. Procédé selon la revendication 10, dans lequel l'étape de moulage implique une température supérieure au point de fusion de la résine.

12. Procédé selon l'une quelconque des revendications précédentes, dans lequel le plastique est une résine de plastique oléfinique.

13. Procédé selon l'une quelconque des revendications précédentes, dans lequel le plastique est l'UHMWPE.

14. Procédé selon l'une quelconque des revendications précédentes, dans lequel l'étape de moulage implique l'application de chaleur à une température égale ou supérieure au point de fusion de la résine pendant une durée suffisante pour former la poudre en une forme en plastique solide souhaitée et éliminer les radicaux libres.
